# EUROPEAN PATENT APPLICATION

(11) **EP 4 177 818 A1**
(43) Date of publication of application: **10.05.2023**
(21) Application number: 21820444.4
(22) Date of filing: 28.06.2021
(51) Int. Cl.: G06Q 50/14, G06Q 50/30, G06Q 50/10, B60W 60/00, B60W 50/14, B60K 35/00

(54) **METHOD FOR PROVIDING TOURISM SERVICE TO WHICH AUTONOMOUS VEHICLE IS CONNECTED**

(30) Priority: 01.07.2020 KR 20200080945
(71) Applicant: KSEEK CO., LTD., Daejeon 34127 (KR)
(72) Inventor: KIM, Young-real, Daejeon 34127 (KR)
(74) Representative: Ter Meer Steinmeister & Partner
(86) International application number: PCT/KR2021/008080
(87) International publication number: WO 2022/005128

(57) **Abstract**

The present invention relates to a technology for providing tourism services combined with an entertainment content service using a self-driving vehicle. The self-driving vehicle includes a game module, a user module, a 4D module, and a driving module etc. to provide the tourism services. The self-driving vehicle provides tourism information for a specific city or a specific area according to the user's language and provides a moving service between tourist spots. In the process of providing the tourism services by means of the self-driving vehicle, the users of participating in the entertainment service use the user module, so that it performs the user missions such as voting, question, quiz, photograph, action, etc., determines the result of the user's user mission, and reflects the result of the determination in the operation of the self-driving vehicle, thereby providing the entertainment service. This technology can be used for games that compete against two different users or teams by accumulating scores according to the operating of self-driving vehicles or by achieving a driving target in a short time, thereby providing a more enjoyable tourism service. By sensing the driving condition of the self-driving vehicle, the tilting caused by the rotation of the self-driving vehicle, the vibration, the shock, etc., it outputs a 4D effect so that people who are on the remote model device receive the feeling, thereby enjoying tourism services based on realistic content for remote participants. In addition, it suggests technologies for providing an entertainment service that expresses virtual obstacles in augmented reality and outputs noise and vibration generated by collisions or obstacles with 4D effects. In addition, a tourism service providing technology in which a plurality of self-driving vehicles continuously performs the tourism services for a specific user is proposed.

## Description

### Technical Field

The present invention is a technology related to a service providing a content service related to local tourism to passengers based on a self-driving vehicle that drives on a road at own discretion, based on topographical features, culture, history, stories, food, etc. of the area the self-driving vehicle is driving.

In more detail, the present invention relates a tourism service method in which information on terrain features, cultural information, historical information, stories, food, etc. related to the region, in which the self-driving vehicle is operated, are provided to a user who rides the self-driving vehicle. The content service may be provided as a one-way service, and may provide user missions such as a quiz, questionnaire, voting, game, or the like to be solved by passengers, and may be responsive content that is applied to content according to the results of performing the user missions.

The content is provided in a combination of at least one of AR, VR, text, image, sound, and the like. The content may further constitute content for 4D effect.

The present invention relates to a self-driving vehicle-based tourism service providing method that provides tourism information related to the region, in which the self-driving vehicle is currently operated, to the passenger of the self-driving vehicle.

In the whole specification, the "user" is a person who is provided with self-driving vehicle-based tourism services. It is considered synonymous with the words "passenger" or "tourist". The "user" can be provided with self-driving vehicle-based tourism services as an individual user or a plurality of users of forming a team.

In the whole specification, the "tourism information" includes descriptions of tourism items, video data, augmented reality content (AR), virtual reality content (VR), user history information, satisfaction surveys, user review data, and the like. The information on the 4D effect is also included in the tourism information.

In the whole specification, the "tourism item" refers to the main object of tourism. It may be a restaurant, hotel, park, temple, palace, landmark building, museum, etc., and includes detailed performance programs or viewing programs.

In the whole specification, the "tourist spot" refers to a geographic location where the tourism items are located. The tourist spot may be a symbolic point where the tourism item is located or refer to all points within a certain area associated with the tourism items. The self-driving vehicles should be moved to the tourist spots so that the users can conduct tours on the tourism items.

In the whole specification, the "personal information" refers to various information related to an individual such as user's age, gender, region of residence, address, phone number, location information, language used, nationality, marital status, user mission execution status, user mission input information, tourism service use history, and family relationship and so on.

In the whole specification, the "competitor" means a team that competes for a specific team or a specific participant participating in the same game for a victory or rank, team participants, or a third party capable of having a competition record. Here, the third party capable of having the competition record may be a person or AI technology.

In the whole specification, the expressions such as "user's self-driving vehicle" or "team's self-driving vehiclet" mean a self-driving vehicle that matches a specific participant or a specific team.

In the whole specification, the "competitor's self-driving vehicle" means a self-driving vehicle matched to another user in a competitive position in the same game. The "competitor's self-driving vehicle" may be a self-driving vehicle driving on a real road or a virtual self-driving vehicle driving in a virtual space.

In the whole specification, the "driving mission" means the work that a self-driving vehicle must perform when using tourism services. It includes a stationary mission that stops a driving for a certain period of time, and a transportation mission for carrying people, objects or animals on and off.

In the whole specification, the "4D simulation" or the "4D module" includes a driving device as one device or module that matches a specific self-driving vehicle, and serves to output driving state information of the self-driving vehicle as 4D effects (impact, acceleration, rotation, vibration, angle adjustment, etc.). The 4D simulator can be installed separately for each seat of the self-driving vehicle, and can be installed in multiple seats or to operate throughout the vehicle.

In the whole specification, the "user mission" is a task that a specific user needs to perform. It includes a vote mission in which several people decide opinions by voting, a quiz mission for solving the quiz, a vote mission in which multiple people ask for opinions, a photo mission that takes a picture of specific requirements, and an action mission for performing specific actions.

In the whole specification, the "tourism item" may be places such as restaurant, lodging, market, castle, school, street, river, and beaches that provide the tourism service and may be objects such as buildings or statues.

In the whole specification, the "tourist spot" refers to the physical location where the tourism item is located. The tourist spot includes at least one or more tourism items. The tourist spots are divided into a starting region, a target region, a starting point, an ending point, a stop point and the like, and can be expressed in various types of points.

In the whole specification, the "tourism course" consists of two or more tourist spots, and the self-driving vehicle provides the tourism services while moving the users to each tourist spot.

In the whole specification, the "route information" is information including driving targets and driving conditions etc. specified in a specific self-driving vehicle. The information on the driving target includes a starting point, a target point, a starting point, an ending point, a stop point, etc. Also, it may include only the driving distance and the time limit without the target point or the starting point.

The driving conditions included in the route information may include a speed control information, a virtual fuel information, a driving mission information, and a map information etc. The virtual fuel information or the speed control information is not actual fuel information of a specific driving device or actual maximum driving speed on a real road, but is virtual data managed for game progress. That is, they are virtual fuel information and speed control information.

In the whole specification, the "driving state information" further includes the actual information of the self-driving vehicle such as a driving speed of the self-driving vehicle, a vibration on the road surface, a posture information, an acceleration and deceleration, a direction change, an actual fuel amount, a driving start, a driving end, and a current position and so on; and the virtual information such as a virtual obstacle displayed in a racing game, a collision with an obstacle, and a virtual uneven effect or vibration according to an obstacle.

In the whole specification, the "user module" receives mission performance information for the user's user mission and transmits it to the service module or receives data from the service module to be outputted.

The user module may be configured to be attached to the self-driving vehicle or may be configured as an element module included in a separate terminal such as a smartphone, tablet PC, or HMD. At this time, the separate terminal becomes the user terminal.

In the present invention, the "display" refers to a unit module for outputting an image included as an additional module in the self-driving vehicle (100). The display included as a module of the user terminal, which exists as a separate device in the self-driving vehicle, is also considered as the display module of the self-driving vehicle to provide the services.

In this specification, the "self-driving vehicle city tour" is a service that provides tourismrelated information while riding a tourist in the self-driving vehicle in a certain area and provides the tourism services while moving to major tourist destinations.

In the whole specification, the "driving module" is a module that transmits and receives data and a module that allows the self-driving vehicles to drive on the road.

In the whole specification, the "mission performance information" refers to information including data that is input through the user module and transmitted to the service module as a result of performing a mission on the user mission or the driving mission. If there is a referee, it may be the result value input by the referee. In a quiz mission, a survey mission or a vote mission, the answer selected by the user becomes the mission performance information. For the action mission, it may be a video or 4D data of the action. In addition, in the method of providing items such as remittances, hearts, or stars, the data corresponding to the result thereof becomes the mission performance information.

In the whole specification, the expressions such as "what of the team", "what of the driving terminal", and "what of the self-driving vehicle" may be the same expression. In the racing game, the team, the driving terminal, and the self-driving vehicle are connected equally one by one, so that the expression "route information of the team" is synonymous with "route information of the self-driving vehicle" and "route information of the driving terminal" connected to the team. The "driving status information of the team", "driving status information of the self-driving vehicle" and "driving status information of the driving terminal" are also used equally for the connected team, self-driving vehicle, and driving terminal.

In the whole specification, the "service module" is a core module that provides the tourism services to the users based on the self-driving vehicles. It is a module that determines which tourist spot to move the user to, what kind of self-driving tourism information is stored in the server, provides the tourism information to users, and controls all matters for providing the tourism services.

The service module includes a game operation module below to operate the game-based tourism service and the game operation module determines the user's mission performance. The service module can be built based on an independent PC, can be composed of some modules of the server, and can be used as a component of the self-driving vehicle.

The service module further includes a DB module and a storage device and is involved in managing the tourism information to be provided to users and providing the tourism services based on major tourism items, tourist spots, and tourism courses.

The service module may be configured independently in the self-driving vehicle so that the self-driving vehicle exclusively provides tourism services.

Each module constituting the self-driving vehicle may be configured separately in an independent server or an independent device such as a PC or smart phone as needed, and it may be desirable to be connected to each other through a network means.

### Background Art

There is a self-driving vehicle as a conventional technology. The autonomous driving vehicles are divided into six levels from level 0 to level 5, and levels 4 and 5 are classified as a self-driving vehicle that can be operated without driving directly by means of person.

In 2018, Waymo launched a pilot taxi business a pilot taxi business in Phoenix, Arizona using the world's first 4-level self-driving vehicle and GM's Cruise and Tesla are competing for technology development to preoccupy service.

In recent years, the development competition for self-driving vehicle has been fierce and global automobile manufacturers and online platform companies are leading the competition for self-driving vehicles. In general, the self-driving vehicles are developed in the form of safely driving an optimal route to arrive at a destination.

These conventional self-driving vehicle technologies are developing technology-centrically in which the vehicle safely drives by recognizing the road environment. Recently, due to the introduction of self-driving, the development of infotainment technology that provides content services to passengers when they are not focused on driving is attracting attention.

The infotainment service of self-driving vehicles introduced so far is characterized in that it consists of additional services that can be performed while the vehicle is moving. There are still difficulties in providing tourism services while moving users.

Another conventional technology is a service that provides tourism services while actually driving a car. In Jeju Island, taxi drivers provide tourism services by moving users to the tourism destinations of the connected tour course by vehicle. In addition, in major cities around the world, a city tour service in the form of providing tourist information directly by using a bus driven by a person is provided.

The existing city tour service has a disadvantage in that the privacy of users cannot be protected because the driver and the tour guide ride together in the bus. In addition, in the case of the tour guide, since the guide guides the tourists directly, the difference in tourism quality is revealed depending on the ability of the guide, and there is a limitation in that it cannot support the language for each user. In addition, if the number of users is a family unit of 5 or less, there is a limit that the tourism cost per person cannot be lowered cheaply due to the driver's labor cost.

### Summary of Invention

### Technical Problem

It is predicted that mankind will be liberated from the labor of driving with the onset of the fourth industrial revolution, led by self-driving vehicles. There is a growing possibility that human working hours will be greatly shortened in other fields as well, raising concerns about the use of more leisure time.

The present invention is designed for tourism services to users by utilizing self-driving vehicles.

While existing self-driving vehicles are being developed to safely move people or objects, this technology intends to present a new concept of tourism service provision method that provides users with information on tourism items related to a certain area as well as information related to tourism while moving people to major tourist spots.

A problem to be solved by the present invention is to enable people to enjoy a fun tourism service while protecting the privacy between close groups such as family and friends, and to realize a profit business including this process by solving the technical challenges to provide self-driving vehicle-based tourism services.

### Solution to Problem

In order to solve the above problem, the present invention proposes a method and a system of providing a self-driving vehicle-connected tourism service that provide tourism information to a user in response to the user's personal information and driving environment, and provides tourism services to the user while moving the user to a tourist spot through the self-driving vehicle.

In more detail, the present invention proposes a method of providing a self-driving vehicle-connected tourism service to a user by a plurality of self-driving vehicles including a step of preparing tourism information related to a tourist spot or a tourism item by the self-driving vehicles or a server; a step of driving by the self-driving vehicles on a road to move to the tourist spot; a step of moving the user to the tourist spot by the self-driving vehicles; and a step of providing the tourism information to the user by the self-driving vehicles.

The present invention proposes a server system that provides information related to the provision of the tourism information and the tourism services to the self-driving vehicle, provides user-customized tourism information in consideration of user's language, position of the self-driving vehicle, information about the driving environment collected by the self-driving vehicle, and user's personal information, and proposed a method to provide interactive tourism services based on AI technology.

The present invention additionally provides a method of providing the tourism services by matching an optimal self-driving vehicle in response to user's request for the provision of the tourism service using a user terminal.

The present invention additionally provides a game-based tourism service so that users can enjoy the tour more fun with the self-driving vehicle. To this end, the present invention further includes a step of receiving mission performance information from the user and reflecting the determination result of determining the mission performance information.

The game-based tourism service induces users to enjoy the tourism service more happily by having them compete with other users through pre-prepared missions.

The user mission includes a photo mission that takes a picture of specific requirements, an action mission for performing specific actions, a quiz mission for solving the quiz, and a vote mission in which multiple people ask for opinions and so on.

In the user mission, a mission in the form of tagging the user terminal at a location installed in a branch may be further added. By outputting information that can identify the user such as a QR code etc. to the user terminal and recognizing it, the user can check the entrance to the building or facility or confirm the visit, thereby designing the user's mission performance.

Alternatively, the user mission may be designed in such a manner that the user terminal recognizes the relevant information about the place and confirms the visit to the place.

In order for the user module of the self-driving vehicle or the user terminal to receive mission performance data from the user, an input device corresponding to data such as answers, actions, and photos for each user mission should be provided.

In the step of determining the mission performance information, it determines whether the correct answer has been answered for the quiz mission or not, in the voting mission, it is determined by analyzing the voting results of the users, in the action mission, it determines whether the action is performed according to the given conditions for the action mission or not, and in the photo mission, it determines whether the photography meets the conditions for the photo mission or not.

In the step of reflecting the result of the user mission to the operation of the self-driving vehicle, it proposes methods in that it temporarily stops the operation, resumes the operation in the stopped state, operates by changing the operation speed, changes the operation route, or selects a specific operation direction.

To change the driving route may include further passing through the tourist spot, omitting the tour of the tourist spot, or changing the driving route in the middle of driving to the tourist spot. It is natural that user missions and driving missions are performed together at tourist spots.

The step of reflecting the determination result of the user mission to the operation of the self-driving vehicle is also configured to provide a virtual obstacle or a virtual accident situation. In this case, AR (augmented reality) technology that displays an image for displaying a virtual driving environment on a display may be grafted. In addition, it further includes a step of outputting a 4D effect for expressing a virtual collision, an irregular road surface, a left and right rotation, etc. for the self-driving vehicle.

### Advantageous Effects of Invention

According to the present invention, it is possible to provide a tourism service using a self-driving vehicle to a large number of users. In addition, it is possible to provide a tour service in which a self-driving vehicle is used to travel around a tourist area in a fun way, or a game-based tourism service in which a plurality of users competes using a self-driving vehicle on an actual road.

Through the present invention, by providing a self-driving vehicle-based local tourism service that can be enjoyed while protecting the privacy of individuals or intimate groups such as family, lovers, and friends, it is possible to revitalize local tourism services and enhance economic effects.

Self-driving vehicles can replace drivers and tour guides with AI technology so that there is no need to be limited by the views of others. In addition, through an AI tour guide service, content optimized in light of personal information such as language and cultural experience for each user will be provided.

It is expected that the present invention will have the effect of supporting new formats of entertainment content services based on self-driving vehicles. In addition, the usability of self-driving vehicles can be expanded by pioneering the genre of tourism services using self-driving vehicles.

### Brief Description of Drawings

The above and other objects, features and advantages of the present invention will be more apparent from the following detailed description taken in conjunction with the accompanying drawings, in which:
FIG. 1 shows a schematic diagram of a self-driving vehicle;
FIG. 2 is a schematic diagram of a user terminal; and
FIG. 3 is a schematic diagram of a tourism service provision method using a self-driving vehicle.

### Best Mode

### Mode for Invention

The present invention provides a continuous tourism service including a server (service module) that provides a new tourism service in the form of combining user-customized tourism information and a mobile service based on a self-driving vehicle, a self-driving vehicle that provides content while moving the user directly, and a user terminal possessed by a user and providing the tourism service.

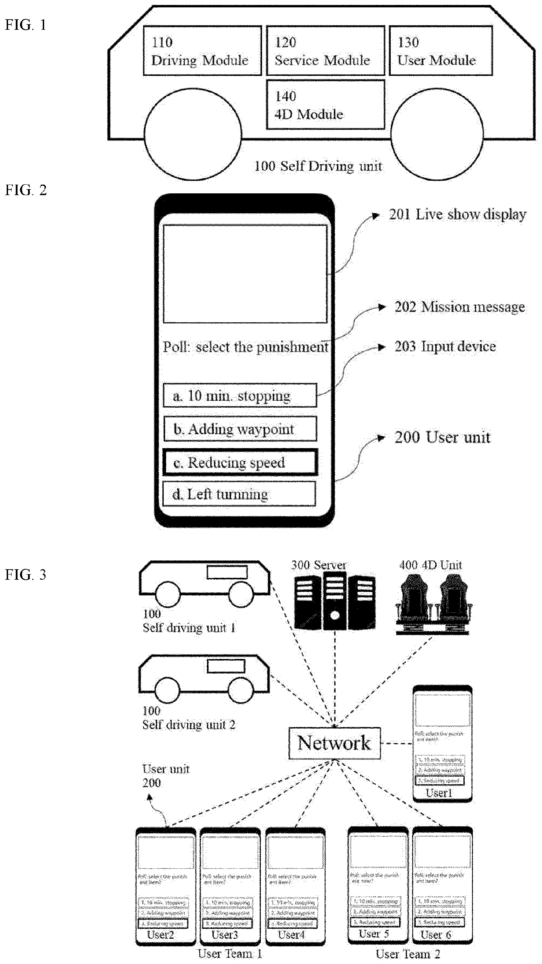

FIG. 1 illustrates a schematic diagram of a first embodiment.

The first embodiment of the present invention is a self-driving vehicle (100) including a driving module (110) for managing self-driving, a service module (120) for managing games, a user module (130) for performing user missions, and a 4D module (140) for outputting 4D effects and further including an output device such as a display speaker that outputs tourism information and a camera that takes an image (not illustrated in the figure).

The self-driving vehicle (100) provides a tourism information service that is classified by language of a user. The service module (120) holds the tourism information by itself or receives the tourism information from a server (300) through a wired/wireless communication method and provides the tourism information to the user.

As a provision method by the service module (120) in language of each user, it is possible to use one of a first method of providing tourist information classified by language of each user or a second method of providing tourism information through translation of data in a different language from that of the user.

A unit module included in the self-driving vehicle (100) may be configured using one or more components or independent devices. It is also possible to configure several modules as a single component or as an independent device.

The driving module (110) manages a function of allowing the self-driving vehicle to autonomously drive. Sensors such as lidar, radar, optical camera, etc. may be included, and precise map information may be included. The module manages a direction change, speed control, stop, and start of the self-driving vehicle.

The driving module (110) may include a plurality of PCs, may include a server system connected through wired/wireless communication, etc., or, if necessary, is configured in a form directly connected to a driving unit and a control unit of the self-driving vehicle.

The driving module (110) drives on a road and moves to a boarding point to pick up the user in response to the tourism service to be provided by the service module (120), and moves to a tourist spot by autonomous driving when the user boards. In order for the driving module to smoothly operate the self-driving vehicle, a precision map and a navigation function are further configured.

The driving module (110), in connection with the tourism service, carries the user and drives the user to a target tourist spot.

When the driving module (110) adjusts route information according to determination of mission performance information of the server (300) or the service module of the self-driving vehicle (100), the driving module (110) reflects a result of the determination of mission performance information in driving by including means for driving at certain deceleration from a speed limit or changing a transit area in response to the adjusted route information.

FIG. 3 illustrates a schematic diagram of a connected tourism service based on the self-driving vehicle including the server (300), the self-driving vehicle (100), and a user terminal (200).

This model is a model in which a plurality of self-driving vehicles (100) is configured around the server (300) and a tourism service is provided to a plurality of users carrying the user terminal (200) such as a smartphone.

The server (300) includes a service module (320) that manages the tourism service. In this model, the service module (120) of the self-driving vehicle is not separately required, and the driving module, the user module, the 4D module, etc. of the self-driving vehicle are connected to the server using a wireless communication method to configure the service.

When the server (300) manages the tourism service, various users can receive tourism information without riding the self-driving vehicle, and it is easier to configure a reservation service, a satisfaction service, etc.

Without the role of the server (300), a plurality of self-driving vehicles may be configured to link and provide a connected tourism service. To this end, self-driving vehicles need to be able to transmit and receive information through wireless communication methods. Further, in order to mutually exchange a location and operation information of the self-driving vehicle and to pick up the user or provide continuous tourism service to the user, service modules distributed in the self-driving vehicle need to be configured to operate in conjunction.

Throughout the specification of the present invention, a situation in which a service module is mounted on a server and a service module required for a model mounted on the self-driving vehicle are described in common.

The service module has tourism information on major tourism items to be presented to users and content and composition scenarios of game-based tourism services, and has a function of presenting and determining various user missions and driving missions.

A DB module analyzes data in order to manage a tourism service history of the user or to provide a better tourism service to the user.

The DB module systematically manages information on tourism items such as restaurants, recreation facilities, hotels, parks, zoos, aquariums, palaces, castles, museums, schools, etc., and the service module is provided with a web service or information service that can input and manage such information.

The DB module is designed to systematically manage information such as location, address, explanatory data, video data, satisfaction information of previous visitors, and user missions of tourism items.

The service module is basically included in the server, and all roles of the server are configured by the service module. The service module can configure some functions in the self-driving vehicle. The service module in the present invention may have the server or the self-driving vehicle to include a function of the service module if needed.

The service module provides a tourism service based on a tourism course set to provide continuous tourism services within a specified area.

A customer using the tourism service uses the terminal to request for the tourism service to the service module, and the service module provides the tourism service to a plurality of users.

The user terminal transmits information including a location to the service module, and the service module moves the self-driving vehicle to pick up the user.

The self-driving vehicle picks up the user and moves the user to a desired tourist spot, and presents a user mission while moving or provides an information service related to the tourism service through a display.

In order to provide a more efficient tourism service, a service module having some functions is included in the user terminal. The user terminal is allowed to manage the tourism service of the user and additionally receive tourism information through the Internet to present the tourism information to the user.

In addition, AR and VR data can be downloaded so that AR information can be displayed on objects captured by the camera of the user module, and a satisfaction level, a congestion level, a preference, etc. of the user are reviewed to recommend an optimal tourist route and tourism item.

Upon arrival at the tourist spot, the self-driving vehicle drops the user off.

When the user finishes the tour at the tourist spot, the user notifies the user terminal of this, the user terminal requests the service module to move to a next tourist spot, and the service module prepares an optimal self-driving vehicle dispatch program and provides a continuous tour service by picking up the user.

The self-driving vehicle receives an instruction for the next pickup service from the service module, picks up other users, and continuously provides the tourism service.

In this process, the service module manages location information and tourism service usage information of each user, and allows the tourism service to be continuously provided in a usercentered manner.

In the tourism information of the service module, it is preferable to include object information used for the self-driving vehicle to recognize an external object and tourism information connected to the object.

It is necessary to prepare tourism information by matching location information such as GPS and tourism information with object information related to objects related to tourist destinations. By analyzing an image captured by the camera at the tourist destination, the object information is compared to distinguish the object related to the tourist destination. Further, by verifying whether there is tourism information connected to the object, a service providing the tourism information is linked and constructed. When the KAIST school gate enters the camera, an image is analyzed to recognize the KAIST school gate, and KAIST viewing information, etc. is provided.

The service module additionally prepares AR/VR content and 4D effect data to output virtual effects, and outputs the virtual effects through the user module included in an additional device such as a self-driving vehicle display, a head mounted display (HMD), or a smartphone.

The service module has a function to determine the game victory of the self-driving vehicle, and includes a timer to check a time spent in the game or to check a user mission limit time, SW implemented as an algorithm in which each user accumulates points through a user mission, etc.

The service module includes a DB or storage device, has content for providing tourism services to users, manages a usage status of a tourism service for each user, contains information on a usage result of the user for a major tourism item or a tourist spot, and stores and manages various scenarios and content for providing game-based tourism services.

The service module may include additional functions such as GPS, map information, object recognition, and short-distance network functions, and includes means for determining a current location of the self-driving vehicle and an external object (such as a major building, signboard, sign, road floor sign, person, animal, vehicle, or landmark) or determining whether an arbitrary location or object is almost reached.

The service module allows the camera to recognize an object or point outside the self-driving vehicle, and provides tourism information connected to the object or point to the user. The camera is a camera of the self-driving vehicle or a camera of the user terminal. It is possible to have the user terminal or the self-driving vehicle perform object analysis by using a CPU operation function.

FIG. 2 is a schematic diagram of the user terminal carried by the user.

The user module (130) includes an output device such as a display for outputting an image and a speaker for outputting a sound. In addition, the user module includes an input device such as a touch pad, mouse, keyboard, voice recognition camera, microphone, etc. The user module (130) further includes a motion sensor capable of receiving motion information.

The display is configured to extend to a display module such as a tablet PC, a smartphone, or an HMD being used by the user.

In the present invention, it is possible to apply the user module (130) to the user terminal (200) configured in a separate HW terminal, and it is interpreted that the user module and the user terminal have the same application.

An example of the game-based tourism service provided by the present invention is a time recording game for a mission performed by a user enjoying tourism while moving to a designated tourist destination. A single self-driving vehicle (100) is used to perform a mission while moving through a major designated tourist spot, and a time taken for this is recorded.

While the self-driving vehicle is driving, a score is obtained from a driving mission or a user mission, and each score is accumulated. The plurality of users constitutes a game service in which a ranking is determined based on a completion time or each accumulated score.

The service module (120) is configured to present various types of game-based tourism service scenarios and corresponding user missions and driving missions, etc. For content such as quizzes, votes, and photos of user missions, it is desirable to use content of an area or city where the self-driving vehicle operates.

It is possible for the service module to use the user terminal to perform a user mission. However, for a user riding in the self-driving vehicle, a camera, a touch pad, a motion sensor, a keyboard, a mouse, and a device for receiving input of voice may be provided in the self-driving vehicle to receive mission performance information, etc.

It is preferable that the service module presents the user mission to the user on board by using an output device such as a display or a speaker of the user module.

In other words, in the case of a game service using the self-driving vehicle in the center of Rome, a tourist route can be configured to pass through famous places in Rome based on tourism items, tourist information, and quizzes about Rome. When London is the background, quiz content etc. about London is provided.

It is desirable to utilize content of the city or region serving as a driving background even for virtual obstacles and virtual road environments. In this method, when the self-driving vehicle slows down or stops due to the appearance of virtual people at a virtual crossing that suddenly appeared in the self-driving vehicle running in the background of Athens, a virtual reality image in which Socrates crosses a road with his disciples is prepared to be shown in an environment outside the display of the self-driving vehicle or the display of the user terminal.

The service module (120) provides the tourism service to the user using a method in which major information such as tourism information, user tourism service usage information, driving state information, route information, etc. is frequently exchanged with a driving module, a participant module, a display, etc.

The service module records and manages a tourism service usage result of each user, and collects user satisfaction and opinions for each tourism item.

The service module provides a mobile service and a tourism information service to users based on a tourist route that connects a plurality of tourist spots. Here, the tourist route may be a tourist route input and stored by a person, or a tourist route automatically set according to big data analysis.

The service module stores and manages tourism information data. A service is provided so that city tourism business parties or tourism service experts can compose these materials, and there is a function of self-collecting information on the Internet such as related news and blogs.

The service module continuously investigates, records, and manages user reviews and satisfaction from users using tourism services, and collects relevant information on the Internet to build big data.

The tourism information managed by the service module may be text, photo, or video including storytelling of famous tourism items, and includes data related to 4D effects.

Tourism information includes restaurant information, lodging information, information on major landmarks, and information on performance venues or performance programs together with related physical location information and user satisfaction or review information.

The service module presents a plurality of tourist routes on the user terminal or the display and allows the user to make a selection. A function is provided so that user selects a tourist route and adds or deletes a tourism item in the tourist route.

In the tourist route, information such as a congestion level during the tour, the results of previous user satisfaction surveys, ratings, and reviews are presented to assist the user in a selection process.

The service module is allowed to calculate the congestion level for the tourism item. The congestion level can be calculated in consideration of the number of capacity that can be accommodated by the tourism item, an average tour time of people, a waiting time to use the service, etc.

In order to estimate a future congestion level for the tourism item, the service module estimates a congestion level in a subsequent time period in consideration of a reservation service and a usage pattern of the tourism service provided for each tourist route currently being provided.

The service module accumulates congestion levels for all tourism items included in the tourist route. In particular, it is possible to calculate the congestion level including a travel time highly related to the congestion level of the road, and the congestion level of the tourist route is calculated according to the travel to all tourist spots and the expected tour time of the tourism item.

The service module calculates the congestion level of the tourist route at a future time.

In addition, the service module provides a curation-based tourism service that constructs or suggests a new recommended tourist route by analyzing personal information of the user, reservation status of tourism items, existing tourism service usage records, user reviews, travel preferences, a congestion level, etc.

The curation-based tourism service is provided by selecting a recommended tourist route by referring to tourism items or tourist routes preferred by users showing high satisfaction in common or provided by newly composing a recommended tourist route.

The curation-based tourism service may be provided as a chatbot-type service that provides results in an interactive AR/VR image using virtual digital characters.

It is preferable to configure the curation service by including the service as a SW function of the user terminal.

The service module is configured to provide tourism information to the user in a manner described by a digital character displayed on the display. In this instance, it is possible to designate a digital character based on the personal information of the user.

It is preferable that the digital character looks like a human face and can have emotional expression through expression production. In addition to humans, it is possible to anthropomorphize objects such as dogs and robots.

The service module prepares various tourist information necessary for city tours in various cities. When providing tourism services by building self-driving vehicle-based tourism information for multiple cities, the server recommends an optimal city and a tourist route in the city to the user, and provides continuous tourism services through digital characters mainly serviced to users.

The service module analyzes satisfaction and reviews of users for each unit tourist route, each tourism item, or each tourist area, and recommends and presents tourist routes and tourism items based on the personal information of the user.

The service module can make reservations for major restaurants, lodgings, and tourism items that require reservations. An optimum tourism service is recommended to users in consideration of whether reservation or use is possible, reviews and satisfaction surveys of other users, and personal information and preferences of users.

The service module creates and presents an appropriate tourist route to estimate and consider the current or future congestion level to provide the optimal tourism service with limited tourism items.

A process in which the service module considers the congestion level further includes a congestion level of road conditions such as travel distance and travel time using the self-driving vehicle. In addition, a waiting time of users for using self-driving vehicles is further included.

The service module recommends tourism services in various ways, such as recommending a tourist route, recommending a tourism item, or recommending a restaurant or accommodation.

The service module suggests a recommended tourist route based on the personal information of the user using a method of analyzing various data such as the satisfaction results of people that used the tourism service before, the number of search hits, age, and gender, and systematizing and creating an optimum tourist route based on the personal information of the user.

The service module utilizes the 4D module and the display module of the self-driving vehicle (100) to provide a virtual 4D effect associated with virtual content to the user.

For example, in the case of traveling using horseback riding effect, a 4D simulator outputs an effect similar to horseback riding, and in the case of viewing the outside of the vehicle, a herd of horses moving around the meadow or horsemen participating in the battlefield are configured to run together by AR content on a display module (150) such as the HMD.

When the HMD secures an external image reflected by the gaze of the user, the HMD analyzes the image to recognize an object. The HMD is a generic term for display devices mounted on a head of the user, and includes a goggle-type HMD, a smartphone docking-type HMD, and smart glasses.

The self-driving vehicle (100) is additionally equipped with a sensor such as a camera or lidar, and through this sensor, an external object is identified and tourism information related to the external object is provided through the display. Tourism information is displayed along with the image captured by the camera or only tourism information is provided on the display.

When the service module recognizes the object, the related tourism information content is expressed as an AR or VR effect, and a 4D effect is output.

The service module secures data of a driving environment in which the self-driving vehicle is currently driving and allows related 4D and AR/VR content to be provided together.

When the self-driving vehicle passes around Cheomseongdae in Gyeongju or recognizes Cheomseongdae using a camera, a method is implemented to provide a 4D action of feeling as if riding a palanquin while providing AR/VR content in which Queen Seondeok is in a procession to hold a ritual on a palanquin.

When the self-driving vehicle operates in a famous battlefield, it is possible to recognize the spot and apply a method in which AR/VR content that reproduces the battle situation is provided with 4D effects and AR/VR content under bombardment.

The self-driving vehicle may correspond to at least one user terminal, and the user terminal may correspond to at least one self-driving vehicle. Even when a plurality of self-driving vehicles moves through a plurality of tourist spots and provides tourism services to a plurality of users, a user terminal is connected to one self-driving vehicle for a user scheduled to board or a user on board.

As another example of a game-based tourism service, a scenario can be presented in which the user allows the self-driving vehicle to reach a specified target tourist spot within a specified time and defines a result as success/failure. The user can finish the game advantageously by performing a prepared user mission well, and enjoy the tourism service through a process of winning the game.

In order to provide a game-based tourism service in this way, the service module (120) ranks or determines success/failure based on a time taken for driving or scores obtained from driving mission of the self-driving vehicle and from the user mission of the user after a plurality of users proceeds in order.

Another game-based tourism service is a form in which a plurality of self-driving vehicles of the same type is introduced and a plurality of users compete competitively on the same tourist route at the same time.

The user module (130) additionally configures a function of receiving mission performance information and a satisfaction survey for tourism services in response to a user mission or a driving mission. In order to receive mission performance information, the function includes input functions of a camera, a microphone, a motion sensor, a GPS, etc.

The service module (120) includes a step of determining mission performance information for a user mission or a driving mission received from the user module (130).

The service module (120) determines the mission performance information based on whether a correct answer of a quiz is satisfied for a quiz mission. Differentiated scores can be given based on whether the correct answer is completely satisfied or partially satisfied.

A step of the service module (120) determining an action mission includes a function of measuring a motion related to an action and determining whether the motion matches a target motion or a function of receiving an input of singing a song and reading and determining the song for a singing mission. It is possible to receive and analyze an input of facial expressions, cheers, and exclamations of the user responding to a tourism information service to respond to an input of a satisfaction survey result of usage.

The service module (120) has a function of reading and determining a photo to determine a photo mission.

In the online game, the winning or losing of two or more users may be a determination result, or a stage of the game passed by the user or whether or not the user participated in the game may be a determination result. The participation of the user in the online game is also included in the action mission.

A 4D module (140) is a device that allows the user to feel the 4D effect through a physical shock or a change in posture, and may include clothes to be worn, a seat that can be driven, an indoor space that can be driven, etc. The 4D module is configured in the form of outputting 4D data configured to express the impact, deceleration, acceleration, and rotation of the vehicle.

When the user fails to successfully perform a user mission or a driving mission within a time limit, the service module (120) may apply a virtual physical effect to the user as a penalty in such a way that the user is shocked by a road sill suddenly appearing through the 4D module (140).

The service module (120) makes it possible to express a sudden stop or a sudden start, and to display the effect of driving a virtual driving environment.

The virtual driving environment may be a driving environment such as an unpaved road, a sandy beach, a gravel road, unevenness, or a roadside, and a driving environment such as a sharp turn or running on a horse or carriage may be applied.

Content may be additionally configured in the virtual driving environment. More realistic tourism information is provided by displaying related content such as AR and VR on the display and outputting related sound.

A function is additionally configured so that the service module (120) relates an image of a virtual object with a user mission, a driving mission, and a penalty in a driving situation in a manner of being synchronized with the 4D effect output of the 4D module (140) and the user module (130) outputs an image related to a virtual situation.

When the service module (120) transmits virtual image information or data related to the image information to the user module (130), the user module secures the virtual image information and outputs the information to a display thereof or a connected display device.

In addition to the method of outputting only the virtual image, the user module (130) is also configured by a method of outputting a virtual image in addition to an actual image captured outside the vehicle.

It is configured so that the virtual image output by the user module (130) can express a collision with a virtual vehicle or building, a situation in which a road is destroyed by a rocket launched by a competing team and driving is blocked, objects (which may be rocks, people, animals, etc.) appearing as obstacles on an external road, events related to historical events on roads or crossings, etc.

FIG. 2 is a schematic diagram illustrating an example of using a smartphone as a user terminal.

Even though FIG. 2 illustrates the smartphone as the user terminal (200), the independent user terminal (200) is not limited to the smartphone and may be replaced with a tablet PC, a laptop PC, a PC, or a separately manufactured HW terminal.

When the user terminal (200) is configured as a separate device, the functions of the user module may be configured in the user terminal throughout the specification. The user module should be understood as an accessory function of the user terminal regardless of the separate delimiter of the module or device.

The user terminal (200) and the user module (130) of the self-driving vehicle may be configured to overlap each other, and it is desirable to also provide a user service complementary to each other.

When the smart phone device is used as the user terminal (200), it is possible to provide a connected tourism service to a plurality of user with one self-driving vehicle at the same time by providing a tourism service that is customized for each user based on the user terminal.

When a smartphone is used as the user terminal (200), a display or input device may be limited. In this case, it is preferable to supplementally configure a large-size standard display or various sensors installed in the self-driving vehicle as a user module.

When the user terminal (200) can output vibration or shivering, it is preferable that the user terminal (200) supports some functions of the 4D module. 4D data such as rotation, unevenness, acceleration, deceleration, etc. can be output.

An application or SW that performs the user module function is installed or downloaded on the smartphone and operated, and data is exchanged with the self-driving vehicle through communication means such as Bluetooth, WiFi, or the Internet to perform a role.

The service module composes game-based participation technology for a plurality of user terminals to induce the plurality of users to competitively participate in the mission and to give individual points to those succeeded in the mission. When the plurality of users participates in the same mission, the service module may allow only those succeeded in the mission within a certain rank to be recognized as success and given a score.

The service module provides a service that configures driving route information including a plurality of tourist spots and provides a game in which the self-driving vehicle drives all of the designated driving points. In this case, a driving mission is provided for each driving point. The driving points are considered to include the tourist spots.

The driving mission is performed using the user module (130) or the user terminal (200). As the driving mission, the self-driving vehicle can load designated items at a driving point, pick up people or animals, or move the people or animals to another location.

As another example of the tourism service according to the present invention, there is a game-based tourism service in which two or more self-driving vehicles participate, some are an escape team that need to achieve the purpose of escaping, and some are a tracking team that need to catch the escape team.

The service module (120) groups the self-driving vehicles determined as the escape team and users connected thereto and groups the self-driving vehicles determined as the tracking team and users connected thereto to provide a game-based tourism service including a user mission and a driving mission.

The service module (120) presents a driving route including a plurality of tourist spots to be completed to the escape team. The service module (120) provides various driving missions to be performed on the driving route.

The service module (120) provides a user mission to the escape team and reflects a mission result in the driving of the self-driving vehicle according to the user mission. When the user performs the mission well, points that should be driven are reduced or a part of the driving mission is relieved.

The service module (120) accumulates determination results of the driving mission and the user mission in the score for each user to create overall ranking information of the user.

The service module (120) configures an item for a penalty to be imposed on a corresponding team or user when the driving mission or the user mission is not performed or for a reward to be imposed when the user performs well.

The penalty imposed by the service module (120) according to the result of the driving mission or the user mission may include encountering a virtual obstacle, reduction in virtual fuel, or change of driving route.

As a reward imposed by the service module (120) according to the result of the driving mission or the user mission may include removing a virtual obstacle, replenishment in virtual fuel, or exclusion of a driving point.

As another reward, a team may be given a virtual weapon that can attack an opposing team. The virtual weapon may be a rocket attack, obstacle installation, road blocking, pause, deduction of virtual fuel, and pause of user activity.

As another reward, online currency, money, goods, etc. may be offered as prizes, or a ranking is determined based on accumulated scores.

The service module (120) displays a virtual obstacle on the user module (130) and provides a user mission for the user to remove the virtual obstacle using the user module (130).

In other words, a virtual image related to the procession of a flock of monkeys that appears as a virtual obstacle on the road is output, and to remove the monkey obstacle, the user throws a banana preferred by the monkeys as an item or delivers the banana by an input action such as dragging and dropping, and received mission performance information is transmitted to the service module (130).

It is also preferable that the service module (130) is configured in such a way that some or all of the obstacles are removed by determining the mission performance information as an action mission of the user.

Various user missions suitable for game elements are configured including the user shouting or performing a certain pattern of action to eliminate obstacles.

The service module (120) displays information on the attack right of the user on the user module (130), and the user module (130) provides an interface so that the user can select a target to use the corresponding attack right.

The user selects a competitor for using the attack right through the user module (130), receives an input of execution of the attack right, and transmits the execution to the service module (120). The service module (120) approves such an attack right and applies the right to the operation of the self-driving vehicle of the attack target.

For a user mission performed by a plurality of users of one self-driving vehicle, a result of mission performance performed by the users together is operated as a criterion for determining the mission performance result of the self-driving vehicle. For example, when six users submit an answer to a quiz mission, the mission may be determined to be successful only when two or more users submit a correct answer.

The service module (120) receives, from a plurality of user modules (130), and analyzes mission performance information for a voting mission for determining a desired driving direction in a plurality of driving directions, and the driving module (110) drives in the most selected driving direction.

In response to the voting mission of the service module (120), the user module (130) provides a user interface for selecting one or more options among several options. In addition, an input device is provided to allow subjective voting.

The voting mission selected by the service module (120) through voting is configured as a user mission such as selecting a penalty favorable to the own self-driving vehicle or selecting a penalty unfavorable to the self-driving vehicle of the competitor.

The service module (120) can be configured by applying a criterion for voting mission failure, such as recognizing the voting mission as a failure, when the user above a specified level did not vote or when there is no result of receiving a vote above the specified level.

When a user succeeds in the mission, the service module (120) applies the result to the tourism service to be advantageous for the user's game by adding more virtual fuel or reducing penalty factors such as deceleration or pause.

It is possible to configure the server (300) as a single computer. However, if necessary, the server (300) is preferably divided according to a functional unit and configured as a plurality of servers.

The server (300) constitutes a combination of a plurality of self-driving vehicles and user terminals, and is configured to provide a tourism service in which a plurality of users or teams participate simultaneously through a network.

The server (300) configures main functions of the service module (120) for game operation to form an independent server. At this time, the service module (120) of the self-driving vehicle (100) needs to be removed or configured to be used as a supplement.

When the service module (120) of the self-driving vehicle (100) is not configured, the server (300) is configured to respond to each module of the self-driving vehicle through communication.

The server (300) is configured to independently perform all the functions presented by the service module (120) or if necessary, the server (300) is preferably configured such that the server (300) and the service module (120) complement each other while maintaining the service module (120) in the self-driving vehicle (100).

In a game-based tourism service in which a plurality of self-driving vehicles (100) competes in real time, it is preferable to include a service module in the server (300) and allow a plurality of self-driving vehicles connected through a network to participate in the game.

In order to provide a game-based tourism service between self-driving vehicles without the server (300), a service module is built in each self-driving vehicle, and each service module is implemented through communication and work sharing with each other.

In the user mission and driving mission required to provide the game-based tourism service, the service module has a mission system for various targets such as a mission in which some users individually participate, a mission in which some or all users of a team participate, or a mission in which all users participate.

When a plurality of users participates in a quiz mission at the same time, the service module receives an answer that is mission performance information from the user terminal within a predetermined time and determines whether the answer is a correct answer. It is desirable to perform the determination such that differentiated scores are given according to whether the answer perfectly matches or partially matches, a time taken for the answer, etc.

When a certain user succeeds in a mission in which a plurality of users participates simultaneously, the service module may determine that a mission performance of a user performing the mission thereafter as failure. In a quiz mission, in the case where one user gets a correct answer first, another user cannot be determined to succeed or receive a score even when the other user participates in the quiz mission.

The service module provides voting missions for users of the team, determines results, and allows the results to be reflected in the driving of the self-driving vehicle of the team or the self-driving vehicle of the competitor. When a voting result is reflected in the driving of the team, determination can be made in a more favorable direction for the game, and the driving of the self-driving vehicle of the competitor can be hindered or made difficult through the voting result.

The service module provides voting missions in the form of making determination favorable to driving of the team or penalizing a competing team by making driving thereof difficult.

User team 1 includes three users, user 2, user 3, and user 4, and user team 2 includes two users, user 5 and user 6.

The service module provides a simple quiz mission to assign two self-driving vehicles of different types to each team. The quiz mission is subjective and presented to user terminals of the five users at the same time.

When each of the five users inputs an answer considered to be a correct answer to the user terminal, the user terminal transmits the corresponding answer to the service module, and the service module determines whether the answer is the correct answer.

The service module gives the team of the user answering the correct answer first the right to select between two self-driving vehicle models first.

Assuming that user 3 has the correct answer, the service module presents a voting mission for all members of team 1 to select one of the two self-driving vehicles. Voting closes within a limited time, and the service module allocates the most selected vehicle model to team 1 and the remaining vehicle model to team 2.

The service module can allocate two pieces of route information from two or more pieces of route information to each team through such a mission performance method.

The service module prepares and retains route information for a plurality of tourist spots. The route information can be set in the form of designating main points at the beginning and the end or passing through main tourist spots. The service module allocates route information to each self-driving vehicle, and the self-driving vehicle starts driving based on the route information.

The service module allows each team to designate the attack right and the evasion right. It is desirable to provide the attack right and the evasion right when the user mission or driving mission is successfully performed.

The attack right is used by each team to disrupt the driving of the opposing team by stopping the driving for a certain period of time, making the opposing team meet virtual obstacles while driving, or adding an unfavorable driving section.

The evasion right is provided in the form of skipping some tourist spots and driving sections or nullifying obstacles.

Related information is transmitted to a user terminal belonging to the team so that all or some of the members of team 1 can use the attack right and the evasion right, and the user terminal (200) has an output and input function for selecting an attack target or permitting use so that the attack right can be used.

The service module needs to be configured to designate a user as a team leader for each team so that the team leader becomes a person concerned that executes the attack right and the evasion right or becomes a person concerned that performs the user mission or driving mission. A voting mission may be performed at the stage where the user is determined as the leader of the team, and it is desirable to have some of the cast members take charge during the game broadcast production.

The service module is allowed to provide a voting mission as an additional user mission so that the attack right or the evasion right is determined by collective intelligence of the majority. Content according to the attack right and the evasion right is reflected based on a voting result.

When the user uses the attack right against the opposing team, the user terminal (200) receives attack right usage information and transmits the information to the service module. Upon receiving the attack right usage information from the user terminal of the team, after whether the corresponding attack right can be used is verified, the usage is approved to adjust route information of the opposing team, and related information is transmitted to the driving module (110). The driving module (110) receives the adjusted route information and applies the information to the driving of the self-driving vehicle.

The service module may be configured to provide route information from beginning to end to the driving module. As another method, the service module may provide route information using a method of dividing the entire route information into several section units so that route information of a tourist section to be completed sequentially is transmitted to the driving module (110).

In the case where the service module is configured to transmit route information including several sections to the driving module (110) in stages, when a time delay penalty is applied to the self-driving vehicle, route information of a next section may be provided to the driving module (110) as late as a time to delay after completing route information of an arbitrary section.

The service module composes the route information of the self-driving vehicle by adding more mission information. The mission information to be performed by the driving module (110) of the self-driving device includes a method that can be performed in the field, such as a method of arriving via a location, a method of taking a picture of a designated target, a method of loading an object, etc.

The service module further adds information on virtual fuel information and maximum driving speed to the route information. Here, the fuel information is not information about the fuel of an actual self-driving vehicle.

The fuel information enables the self-driving vehicle to determine whether to stop and resume operation or to set the maximum driving speed. When driving continuously with the designated route information, the fuel is deducted. In the actual game-based tourism service, fuel information may be displayed in points or other formats.

The self-driving vehicle is driven at a speed whichever is lower between the maximum driving speed of the route information and the legal maximum driving speed of the road on which the vehicle is actually driven. It is preferable to set the maximum driving speed to -10 km/h, -20 km/h, etc. to designate the amount of deceleration from the actual road speed limit.

When the fuel is greater than or equal to a certain amount, the actual operating speed of the self-driving vehicle is set to the maximum speed allowed on the road, and when the fuel is less than or equal to the certain amount, the maximum operating speed is adjusted to be lowered.

The service module transmits a user mission to the user terminal (200) to prevent a situation in which the fuel amount is insufficient for users using the game-based tourism service.

When the user inputs mission performance information to the user terminal (200), the user terminal (200) transmits the information to the service module and the server replenishes the specified amount of fuel.

In the service module, user missions provided for virtual fuel replenishment may be quiz solving, advertisement viewing, data input, photo missions, etc. Depending on whether the condition is satisfied or not, it is possible to adjust the amount of fuel to be replenished or not to be replenished.

In the service module, the fuel is preferably displayed as a number with a unit of amount. However, the fuel may be displayed as points or the number of items such as hearts, or stars. It is desirable to configure fuel, points, items, etc. using a plurality of methods.

The service module transmits some or all of the driving state information and route information of the self-driving vehicle using the game-based tourism service to the user terminal (200). The user terminal (200) receives and outputs the driving state information and route information.

The service module transmits image data related to the game progress to the user terminal, and the user terminal (200) receives the image data and outputs the image data on the display.

When there is information related to a virtual obstacle in the image data, the virtual obstacle is displayed to be viewed on the display of the user terminal (200), and information related to mission performance of users for removing the virtual obstacle is received and transmitted to the service module.

When the virtual obstacle is a rock, the display displays the virtual rock on the real road screen using AR technology, and the user is provided with means for removing the obstacle through a user mission in the form of pulling out the virtual rock or hammering to break the rock by touching the screen.

When the virtual obstacle is a cat, a photo mission is configured so that the user takes a picture of the cat and transmits the picture and the service module receives the cat picture from a plurality of users and makes the cat disappear.

A user mission is further configured in which a user pays a price by paying a certain amount of electronic money or points in order to remove the virtual obstacle.

The service module presents a penalty in which the user or participating team detours to another route or a certain time is delayed, while the obstacle is not removed. As another penalty, deprivation of user qualifications, termination of the game, suspension for a certain period of time, elimination, etc. is given.

When the self-driving vehicle of the team receives a driving attack from the opposing team, it is preferable to notify user terminals of team members of the team of information related to the use of the attack right of the opponent.

The user terminal (200) needs to further include a function of selecting an opposing team to attack to prepare a case of three or more self-driving vehicles and two or more opposing teams.

The service module provides user mission information to the user terminal (200) so as to secure an item used for the attack right of the opposing team.

When the user completes the mission, the service module grants the attack right to the team or the user and transmits the attack right information to the user module.

The service module has an input tool to receive the attack right information, output the information so that the user can use the information, and allow the attack right to be used.

When the user inputs information to use the attack right, the user module transmits information about the self-driving vehicle to which the attack right is to be applied and information related to the attack right to the service module.

The service module finally constitutes a step of determining a result of the self-driving vehicle-based game. The service module determines the result of the game using one of a method of determining the ranking based on driving results of a plurality of self-driving vehicles, a method of providing prizes, a method of determining victory and defeat with competing users, a method of determining success or failure of driving results, etc.

The service module allows the result of the driving mission of the self-driving vehicle matched to the user to be reflected in the result determination of the game. In other words, the game result of the self-driving vehicle should reflect that a user wins when the user well performed the driving mission of the driving is completed in a short time.

The service module further includes a step of finally determining whether the self-driving vehicle completes the course to satisfy the route information. Whether or not the self-driving vehicle completes the course for the route information is configured so that the driving results such as score or success or failure are reflected in the game determination depending on whether the vehicle properly passes a starting point, destination, waypoint, etc., a time taken to complete the course, and whether the driving mission is performed.

The service module converts the score of passing the driving mission, the time required for completion, and a degree of completion for the route information into numerical values and reflects the driving result in the game result determination.

It is desirable that the service module manages scores by separately reflecting the user mission performance results for each user or team. In addition, the score is managed by reflecting the user mission performance results for each participating team. In addition, in determining the result of the game, user mission performance results of the user or team are reflected.

The service module determines the result of the game, and displays or announces the ranking or result information of the self-driving vehicle or the participating team or user matching the self-driving vehicle. The information is displayed on the Internet, transmitted to the user module, or transmitted to and displayed on the display.

The service module further adds a step of adjusting the driving route of the self-driving vehicle using collective intelligence by gathering determinations of a plurality of users included in the team. Here, the collective intelligence analyzes opinions of the plurality of users and reflects the opinions in the game. A simplest method is to select a competitor through a voting mission and allow selection of attack right to use. Alternatively, it is an excellent method to support selection of one of several driving conditions of the self-driving vehicle.

Another method of the service module to adjust the route information using the collective intelligence is to use a quiz mission. In this method, different words containing letters or spellings are presented, and the team that succeeds first is given the attack right or replenished with virtual fuel.

While performing the user mission, the user strives to apply the mission advantageous to the self-driving vehicle game of the user. The user mission may be to answer a quiz question correctly, perform a specified action, or imitate a specified sound. The performance of the user mission of the user may be a method of inputting to the user terminal using an input device. An input method is configured using a method of shaking the user terminal up and down or left and right, a method of clicking an icon displayed on the display of the user terminal, etc.

FIG. 2 illustrates a schematic diagram of a user terminal. The schematic diagram of FIG. 2 is a user terminal using a smartphone, and there is a touchpad on the screen in which the display and the input function work together. Separately, a microphone and a camera have input functions, and a GPS function, a network function, and a motion sensor function are further included.

In the present invention, 'driving state information' and 'route information' do not necessarily include all relevant detailed information, and are configured in a combined form to include only some configuration information necessary to configure an actual service.

In the present invention, in addition to the method in which one self-driving vehicle provides continuous tourism services to users, it is preferable to also configure a plurality of self-driving vehicles (100) to provide connected tourism services to users. In general, many people flock to famous tourist spots, and it may not be desirable for the self-driving vehicle to standby while the user gets off at a tourist spot and enjoys sightseeing. A reason is that it is not easy to secure a parking lot or there is a possibility of traffic congestion.

In order to provide continuous tourism services to users based on the plurality of self-driving vehicles (100), a tourism service provision method centered on the server (300) needs to be configured.

That is, the service module is allowed to manage a tourism service usage history of the user, arrange an optimal self-driving vehicle in response to the tourism service for each user or team, and continuously provide the service.

Even when self-driving vehicles boarded by users or a user group to move to a number of tourist spots are different, the service is provided by connecting tourism items included in a tourist route used by the users.

A user getting off at a tourist place after moving by a self-driving vehicle needs to be able to board a self-driving vehicle other than the above-mentioned self-driving vehicle and move when moving to a next tourist place after completing a tour or mission at the tourist place.

In this way, in order for a plurality of self-driving vehicles to maintain continuity and to support tourism services, the server continuously provides users with services such as movement and tourism information necessary for the users while managing the history of tourism services for the users and appropriately deploying the plurality of self-driving vehicles.

The service module analyzes the existing tourism usage information based on personal information of the user to recommend a tourism service to the user. This tourism service is presented in a method of accumulating data on various tourism service usage results according to age, gender, marital status, and user composition and making inferences through big data analysis.

A user satisfaction level can be determined by directly conducting a satisfaction survey, directly analyzing a degree of pleasure in a photo of the user in a major mission, or accumulating basic information about a satisfaction level from voices and facial expressions of people in the vehicle.

By equipping self-driving vehicles with the same specifications in the background of a unit city such as Rome or Daejeon, developing tourism resources in the city, and building a DB, it is possible to provide a futuristic city tour service that can be enjoyed comfortably regardless of a gaze of a driver or a tour guide.

### Industrial Applicability

The present invention is intended to be used in the future city tour business, which is a business group of KSEEK Co., Ltd. The KSEEK Co., Ltd. has an interactive broadcasting platform that participates in quizzes and questions with a large number of people participating at the same time, and is preparing an entertainment service based on a self-driving vehicle as an expansion project in this area. The entertainment services include interactive self-driving game shows and responsive autonomous city tour services etc.

## Claims

1. A method of providing a self-driving vehicle-connected tourism service to a user by a plurality of self-driving vehicles, the method comprising:
a step of preparing tourism information related to a tourist spot or a tourism item by the self-driving vehicles or a server;
a step of driving by the self-driving vehicles on a road to move to the tourist spot;
a step of moving the user to the tourist spot by the self-driving vehicles;
a step of providing the tourism information to the user by the self-driving vehicles or the server; and
a step of moving the user finishing a tour at the tourist spot or for the tourism item to another place by the self-driving vehicles.

2. The method according to claim 1, wherein the self-driving vehicles or the server provides the tourism service in connection with a user terminal being used by the user.

3. The method according to claim 1, further comprising a step of outputting a 4D effect in connection with the tourism information by the self-driving vehicles.

4. The method according to claim 1, wherein the self-driving vehicles or the server provides a game-based tourism service to the user.

5. The method according to claim 1, wherein a plurality of users boarding the plurality of self-driving vehicles, respectively, is provided with a game-based tourism service in which the users simultaneously participate.

6. The method according to claim 1, further comprising:
a step of presenting a user mission to the user by the self-driving vehicles or the server; and
a step of determining the user mission.

7. The method according to claim 6, wherein the self-driving vehicles or the server reflects a determination result of the user mission using at least one of a first method of driving by including a new point, a second method of driving by replacing an existing point with another point, a third method of determining a driving direction, a fourth method of changing a previously planned driving route, or a fifth method of omitting driving of some points.

8. The method according to claim 6, wherein the self-driving vehicles or the server reflects a determination result of the user mission using at least one of a first method of adding or reducing a score of the user, a second method of determining disqualification or retention of qualification of the user, a third method of determining a ranking among users based on accumulated scores, and a fourth method of providing a prize.

9. The method according to claim 6, wherein the user mission includes at least one of a quiz mission of getting a correct answer, a voting mission of making a determination through votes of a plurality of users, an action mission of performing a specified action, and a photo mission of taking a picture.

10. The method according to claim 1, further comprising a step of presenting a recommended tourism service based on personal information of the user by the self-driving vehicles or the server.

11. The method according to claim 1, wherein the self-driving vehicles or the server provides tourism information to the user in a form of AR or VR.

12. The method according to claim 1, further comprising:
a step of accumulating scores by determining results of participating in a user mission or a driving mission for each of a plurality of users; and
a step of determining a ranking based on the accumulated scores for each user.

13. The method according to claim 1, further comprising
a step of determining a driving mission determination result by the self-driving vehicles or the server; and
a step of reflecting the driving mission determination result in a score of a user or a team or in a game result determination.

14. The method according to claim 1, further comprising a step of recommending, by the self-driving vehicles or the server, a tourism service based on personal information of a user for tourism information on tourist routes of a plurality of cities.

15. The method according to claim 1, wherein the self-driving vehicles or the server provides a curation-based tourism service to the user.

16. The method according to claim 1, wherein the self-driving vehicles or the server provides AR or VR content to a display and provides a 4D effect in connection with the AR or VR content.

17. The method according to claim 16, wherein the display is replaced with at least one of a head mounted display (HMD) of a user and a display of a smartphone.

18. The method according to claim 16, wherein a plurality of self-driving vehicles uses the same digital character to provide touring information to the user with continuity.

19. The method according to claim 1, wherein the self-driving vehicles provide tourism information by outputting a virtual reality image of at least one of a virtual vehicle accident, a virtual obstacle, or a virtual driving environment on a display.

20. The method according to claim 1, wherein the self-driving vehicles or the server provides tourism information using a digital character.

21. The method according to claim 1, wherein the server, the self-driving vehicles, or a user terminal recognizes an object outside the self-driving vehicles, and the self-driving vehicles provide tourism information related to the object to the user.

22. The method according to claim 1, further comprising:
a step of predicting a congestion level for a tourism item by the server or the self-driving vehicles; and
a step of recommending a tourism item or a tourist route to a user based on the congestion level.
